# EUROPÄISCHE PATENTSCHRIFT

(11) **EP 3 385 683 B1**
(45) Veröffentlichungstag und Bekanntmachung des Hinweises auf die Patenterteilung: **07.07.2021**
(21) Anmeldenummer: 18166179.4
(22) Anmeldetag: 06.04.2018
(51) Int. Cl.: G01G 19/03

(54) **WÄGESYSTEM**
WEIGHING SYSTEM
SYSTÈME DE PESAGE

(30) Priorität: 07.04.2017 DE 102017107586
(43) Veröffentlichungstag der Anmeldung: 10.10.2018
(73) Patentinhaber: WIPOTEC GmbH, 67657 Kaiserslautern (DE)
(72) Erfinder: Düppre, Theo, 67663 Kaiserslautern (DE)
(74) Vertreter: Eder Schieschke & Partner mbB

(56) Entgegenhaltungen:
- DE-A1- 10 356 619
- GB-A- 2 326 488
- US-A- 3 651 936

## Beschreibung

Die vorliegende Erfindung betrifft ein Wägesystem zum formatfreien Wiegen mehrerer Produkte, die mehrspurig und/oder sequenziell bereitgestellt werden.

In der Lebensmittelindustrie werden Produkte mit beliebigen Formen, Größen und Positionen gefördert und gewogen. Die Produkte werden entweder dynamisch oder statisch gewogen. Bei einer statischen Wägung wird das Transportsystem angehalten und das Produkt gewogen, bevor es weitertransportiert wird (Start/Stopp-System). Beim dynamischen Wiegen werden die Produkte während des Transports gewogen. Einen besonders hohen Durchsatz erreichen Mehrspursysteme, welche mehrere nebeneinander angeordnete Wägezellen verwenden.

In der heutigen industriellen Produktion muss das verwendete Wägesystem für hohe Produktdurchsätze und beliebige Produktformate geeignet sein, um Umrüstungen möglichst zu vermeiden. Wenn in einem mehrspurigen Wägesystem mehrere Wägezellen nebeneinander angeordnet sind, kann beispielsweise der Fall auftreten, dass ein Produkt drei Wägezellen belastet, während ein danebenliegendes zweites Produkt eine oder mehrere dieser drei Wägezellen gleichzeitig mitbelastet, die Produkte sich also Wägezellen "teilen". Zwar lässt sich das Gesamtgewicht beider Produkte als Summe der Teilgewichte aller belasteten Wägezellen erfassen, das Einzelgewicht jedoch ist nicht bestimmbar. Dieses Problem ließe sich vermeiden durch Anpassung der Wägezellenanzahl unter Berücksichtigung der Produktgröße und Produktposition. Diese Anpassung ist bei wechselnden Produktgrößen jedoch zeitaufwändig und kostenintensiv. Eine schnelle Erfassung der Einzelgewichte von nebeneinander oder hintereinander bereitgestellten Produkten ist auf diese Weise nicht möglich. Häufig müssen die zu wiegenden Produkte zur Gewichtserfassung auch relativ genau positioniert werden, so dass beispielsweise Mindestabstände zwischen den Produkten, sowohl in Förderrichtung als auch quer dazu, eingehalten werden.

Aus der DE 10 2005 055 755 A1 ist ein Verfahren zum Wiegen mit mehreren Wägezellen bekannt, bei dem mehrere Wägezellen nebeneinander angeordnet sind und bei dem sich das Gewicht eines zu wiegenden Produkts auf mehrere dieser Wägezellen aufteilen kann. Durch Kopplung der jeweiligen Wägesignale lässt sich dann das Gewicht dieses Produkts aus den erfassten Teilgewichten errechnen.

Die US 3,643,798 und die US 3,651,936 beschreiben eine Wiege- und Sortiereinrichtung für Briefe, bei der nach Bedarf Rollen in vertikaler Richtung so verfahrbar sind, dass zwischen ihnen hindurchragende Trägerstäbe einen zuvor auf den Rollen aufliegenden Brief vorübergehend aufnehmen. Die Trägerstäbe sind mit einer Wägezelle gekoppelt, um das Gewicht des Briefes zu erfassen. Auch diese Vorrichtung gestattet es jedoch nicht, die Einzelgewichte mehrerer nebeneinander oder hintereinander bereitgestellter Produkte zügig zu erfassen.

Aus der DE 103 56 619 A1 ist eine Messeinrichtung zur Erfassung des Gewichts geförderter Güter bekannt. Dabei erstreckt sich ein Förderband über eine Reihe von in Förderrichtung hintereinander angeordneter Aufnahmeelemente, die aus einem abgesenkten in ein angehobenes Niveau und umgekehrt bewegbar sind. Im angehobenen Niveau sind das oder die jeweiligen Aufnahmeelemente mit einer Wiegevorrichtung gekoppelt, sodass das Gewicht des auf diesen Aufnahmeelementen auflegenden Produkts (über das dazwischen liegende Förderband) erfassbar ist.

Die GB 2 326 488 A beschreibt eine Wiegevorrichtung, bei der ein entlang eines Rollenförderers bewegtes Produkt temporär von den Rollen abgehoben werden kann, wobei das Produkt gleichzeitig mit einer Wägezelle gekoppelt wird. Nach dem Absenken des Produkts auf den Rollenförderer wird dieses von der Wägezelle wieder entkoppelt und kann weitergefördert werden.

Aufgabe der Erfindung ist es daher, ein Wägesystem zur Überwindung der vorgenannten Nachteile anzubieten. Das Wägesystem soll das formatfreie Wiegen von mehrspurig und/oder sequenziell bereitgestellten Produkten ermöglichen bei zugleich geringem konstruktivem Aufwand und hohem Produktdurchsatz.

Die Aufgabe wird gelöst durch ein Wägesystem nach Anspruch 1 und ein Verfahren nach Anspruch 13.

Die Erfindung geht von der Erkenntnis aus, dass die Einzelgewichte mehrerer gleichzeitig bereitgestellter Produkte dadurch schnell ermittelbar sind, dass deren jeweilige Gewichtskraft nacheinander in aufaddierender Weise dem Lastaufnehmer einer Wägezelle zugeführt bzw. in subtrahierender Weise von diesem entkoppelt wird. Dies geschieht erfindungsgemäß dadurch, dass die Produkte nacheinander den Lastaufnehmer belasten bzw. entlasten, so dass aus der sich jeweils ergebenden Differenz zwischen zwei Belastungsfällen auf die Gewichtskraft des jeweils hinzugekommenen bzw. entfernten Produkts schließen lässt.

Der besondere Vorteil dieses Prinzips liegt darin, dass mit nur einer Wägezelle und in einem vergleichsweise zügigen Wiegeverfahren die Einzelgewichte mehrerer Produkte erfassbar sind, was den konstruktiven Aufwand gegenüber dem Stand der Technik erheblich reduziert und ein beschleunigtes Wiegen ermöglicht. Die erfindungsgemäße Lösung erlaubt zugleich das Wiegen von Produkten unterschiedlicher Formate (formatfreies Wiegen), ohne dass das Wägesystem hierzu speziell vorbereitet bzw. umgerüstet werden müsste. Das Prinzip der Erfindung basiert auf zwei einander durchdringenden Flächen, von denen wenigstens eine Fläche mit dem Lastaufnehmer einer Wägezelle gekoppelt ist, so dass die Gewichtskraft der auf dieser Fläche aufliegenden Produkte durch die Wägezelle erfassbar ist. Die andere Fläche ist vorzugsweise nicht mit einer Wägezelle gekoppelt, so dass die Gewichtskraft der auf dieser Fläche aufliegenden Produkte insbesondere von der vorgenannten Wägezelle entkoppelt ist. Erfindungsgemäß sind beide Flächen in einer von mehreren Teilbewegungen so relativ zueinander bewegbar, dass im Rahmen einer Teilbewegung eine festlegbare Übergabeanzahl von Produkten von einer Fläche auf die andere Fläche übergeht, so dass deren Gewichtskraft die Wägezelle nach dem Übergang zusätzlich belastet bzw. entlastet. Insbesondere kann die Bewegung so erfolgen, dass genau ein Produkt von einer Fläche auf die andere übergeht und aus der Differenz der vorher und nachher erfassten Messwerte der Wägezelle auf das Gewicht des übergegangenen Produktes geschlossen werden kann.

Als "Wägezelle" soll dabei eine Vorrichtung gelten, welche aus einer ihr zugeleiteten Gewichtskraft einen davon abhängigen analogen oder digitalen Messwert erzeugt. Die Wägezelle kann weitere Komponenten enthalten, beispielsweise Lastaufnahme- oder Lasteinleitungselemente.

Die Bewegung der beiden Flächen relativ zueinander erfolgt vorzugsweise translatorisch. Insbesondere kann eine der beiden Flächen im Wesentlichen ortsfest verbleiben, während sich die andere Fläche relativ gegenüber dieser absenkt oder anhebt, um dadurch Produkte an die andere Fläche abzugeben bzw. von dieser aufzunehmen. Beide Flächen sind vorzugsweise annähernd horizontal ausgerichtet und um einen vorzugsweise geringen Winkel α im Bereich 5° bis 15°, vorzugsweise im Bereich 8° bis 9°zueinander geneigt, so dass die Produkte auf beiden Flächen frei aufliegen können, ohne aufgrund ihres Eigengewichts zu verrutschen. Die konstruktive Gestaltung der einander durchdringenden Flächen ist auf verschiedene Weise möglich, wobei Ausführungsbeispiele in den Figuren näher beschrieben sind.

Das erfindungsgemäße Wägesystem ist vorgesehen zum formatfreien Wiegen einer Produktanzahl (m) von wenigstens zwei Produkten, welche mehrspurig und/oder sequenziell bereitgestellt werden. "Mehrspurig" und "sequenziell" bezieht sich dabei auf eine gedachte Förderrichtung, in welcher die Produkte dem Wägesystem zugeführt werden. Mehrspurig zugeführte Produkte können dabei quer zur Förderrichtung nebeneinander liegen, während sequenziell bereitgestellte Produkte in Förderrichtung hintereinander angeordnet sind. In einer speziellen Ausführungsform können die Produkte auch gleichzeitig mehrspurig und sequenziell bereitgestellt werden, also matrixartig.

Das Wägesystem umfasst eine Positionierfläche als eine der beiden relativ zueinander beweglichen Flächen. Auf der Positionierfläche kann eine Teilmenge (k) der Produktanzahl (m) der Produkte positioniert werden, wobei hier auch die unechten Teilmengen k = 0 und k = m mit eingeschlossen sein sollen.

Das Wägesystem umfasst ferner eine Stützfläche, welche der zweiten der beiden vorgenannten Flächen entspricht. Ähnlich wie die Positionierfläche ist auch die Stützfläche zur Auflage einer Teilmenge (n) der Produktanzahl (m) der Produkte ausgebildet, wobei auch hier die unechten Teilmengen n = 0 und n = m mit eingeschlossen sein sollen. Weiterhin ist der Begriff "Auflage" eines Produktes auf der Positionierfläche oder der Stützfläche so zu verstehen, dass das Produkt vollständig auf der jeweiligen Fläche ruht, also seine Gewichtskraft vollständig in nur diese jeweilige Fläche eingeleitet wird. Aus dieser Definition folgt, dass ein Produkt nicht gleichzeitig auf der Positionierfläche und der Stützfläche "aufliegen" kann, also seine volle Gewichtskraft nicht gleichzeitig in beide Flächen einleiten kann. Das schließt jedoch nicht aus, dass das Produkt bei der Übergabe von einer auf die andere Fläche beide Flächen vorrübergehend gleichzeitig berührt und seine Gewichtskraft entsprechend auf beide Flächen aufteilt. Aus der vorgenannten Definition folgt weiterhin, dass sich die jeweiligen Teilmengen (k) und (n) immer zur Produktanzahl (m) der Produkte aufaddieren.

Die Positionierfläche und die Stützfläche sind keine vollständig geschlossenen Flächen. Sie ergeben sich stattdessen jeweils aus einer Reihe einzelner, zueinander benachbarter Auflagebereiche, wobei jedes Produkt auf mehreren benachbarten Auflagebereiche einer Fläche gleichzeitig aufliegen kann, so dass sich die einzelnen Auflagebereiche funktionell zu einer Fläche ergänzen. Zwischen den Auflagebereichen der einen Fläche verbleibende Zwischenräume sind erfindungsgemäß nutzbar für Auflagebereiche der jeweils anderen Fläche, so dass sich die beiden Flächen auch schneiden bzw. so durchdringen können, dass Abschnitte der Positionierfläche oberhalb oder unterhalb von Abschnitten der Stützfläche liegen können. Durch Relativbewegung der beiden Flächen zueinander verändern bzw. verschieben sich entsprechend die jeweils über- oder untereinander liegenden Abschnitte der einzelnen Flächen.

Das erfindungsgemäße Wägesystem umfasst eine Gesamtanzahl (d) von Stützelementen, die vorzugsweise kammartig nebeneinander liegen und im Wesentlichen vertikal aufragen. Die oberen Enden der einzelnen Stützelemente bilden die erfindungsgemäße Stützfläche.

Das Wägesystem umfasst ferner wenigstens einen Lastaufnehmer zur Aufnahme der Gewichtskraft der Produkte, wobei die Positionierfläche und/oder die die Stützfläche bildenden Stützelemente mit dem Lastaufnehmer gekoppelt oder koppelbar sind. Besonders bevorzugt ist die Ausführungsform, bei der lediglich eine der beiden Flächen mit einem Lastaufnehmer gekoppelt ist, wodurch das Wägesystem vereinfacht wird. Denkbar ist jedoch auch der Fall, dass beide Flächen jeweils von einem Lastaufnehmer getragen werden, so dass die durch Übergabe von Produkten von einer auf die andere Fläche entstehenden Gewichtsdifferenzen von beiden Lastaufnehmern unabhängig voneinander erfassbar und damit redundant auswertbar sind.

Unter einem "Lastaufnehmer" soll im Weiteren eine Komponente oder eine Gruppe von Komponenten verstanden werden, welche dazu dient, eine in die Komponente(n) eingeleitete Gewichtskraft einem oder mehreren Kraftmesssensoren zuzuführen. Unterschieden wird in der Wägetechnik zwischen den Fällen, in denen die gesamte zu erfassende Gewichtskraft eines Produktes oder einer Gruppe von Produkten nur durch einen einzigen Sensor erfasst wird ("Single point") und den Fällen, in denen die zu erfassende Gewichtskraft auf mehrere Sensoren verteilt erfasst wird ("Multi point"). "Lastaufnehmer" im Sinne der Erfindung soll beide Varianten abdecken und diejenigen Mittel bezeichnen, welche zur Übertragung der aktuell zu messenden Gewichtskraft an einen oder mehrere Sensoren vorgesehen sind.

Erfindungsgemäß sind die Stützfläche und die Positionierfläche in einer Teilbewegung relativ zueinander so bewegbar, dass dadurch eine wählbare Übergabeanzahl (i) der Produkte von der Positionierfläche an die Stützfläche oder umgekehrt übergeben wird, um die daraus resultierende Änderung der Gewichtskraft zu erfassen. Die wählbare Übergabeanzahl (i) der Produkte kann dabei erfindungsgemäß im Bereich 0 < i < m liegen. Das bedeutet, dass im Rahmen einer Teilbewegung eine Übergabeanzahl von (i) Produkten aus der Teilmenge (k) in die Teilmenge (n) übergeht, während die anderen Produkte in ihrer jeweiligen Teilmenge verbleiben. Das erfindungsgemäße Wägesystem ist somit in der Lage, durch Relativbewegung von Positionierfläche und Stützfläche zueinander eine wählbare Übergabeanzahl (i) von Produkten vollständig von derjenigen Fläche abzuheben bzw. auf diese aufzulegen, welche mit dem Lastaufnehmer gekoppelt ist. Aus den zuvor und danach erfassten Gewichtswerten ergibt sich das Gewicht des oder der übergebenen Produkte. Das System unterscheidet sich vom Stand der Technik unter anderem darin, dass die Übergabeanzahl (i) der zu übergebenden bzw. dadurch zu wiegenden Produkte frei wählbar ist. Hingegen erlauben die bekannten Lehren nur das gemeinsame Bewegen (und Wiegen) aller Produkte, welche sich auf einer der Positionierfläche entsprechenden Auflagezone befinden.

Vorzugsweise beträgt die Übergabeanzahl i = 1, so dass im Rahmen der Teilbewegung genau ein Produkt von einer auf die andere Fläche übergeben wird und aufgrund der dabei auftretenden Gewichtsdifferenz das Gewicht dieses einen Produktes ermittelt werden kann. Anders als im Stand der Technik kann daher aus einer Gruppe von auf einer Fläche aufliegenden Produkten gezielt eines oder mehrere gewogen werden, während die anderen Produkte unverändert auf der Fläche verbleiben.

In einer vorteilhaften Ausführungsform der Erfindung ist vorgesehen, dass die Stützfläche mit der Positionierfläche einen Winkel α ≠ 0 einschließt. Dadurch wird sichergestellt, dass eine translatorische Relativbewegung der beiden Flächen zueinander dazu führt, dass ein zunächst oberhalb bzw. unterhalb der Stützfläche liegender Abschnitt der Positionierfläche nach der Verschiebung darunter bzw. darüber liegt. Vorzugsweise, jedoch nicht zwingend, sind die beiden Flächen eben ausgebildet. Ebene Flächen sind konstruktiv einfach auszubilden. Insbesondere kann eine der beiden Flächen horizontal verlaufen, während die andere Fläche leicht geneigt dazu angeordnet ist. Vorzugsweise erfolgt die Relativbewegung der Flächen zueinander so, dass eine Fläche in einer senkrecht zur anderen Fläche verlaufenden Richtung verschoben wird, was durch einen einfachen Hubmechanismus möglich ist. Allerdings ist auch eine Ausführungsform der Erfindung denkbar, bei der die Stützfläche oder die Positionierfläche oder beide Flächen nicht eben ausgebildet sind, sondern eine vorgebbare, vorzugsweise sogar veränderbare, Topographie aufweisen. Bei einer Relativbewegung solcher Flächen zueinander können sich unterschiedliche Teilbereiche ("Inseln") der einzelnen Flächen zunehmend oder abnehmend gegenseitig durchdringen. Dadurch ist es möglich, die auf den einzelnen Teilbereichen aufliegenden Produkte im Rahmen der Teilbewegung von einer auf die andere Fläche zu übergeben, während rundherum benachbart angeordnete Produkte auf ihrer Fläche verbleiben. Je nach Format, und Anordnung oder Positionierung der insgesamt bereitgestellten Produkte kann diese Art der Übergabe zu bevorzugen sein gegenüber dem Fall, bei dem unmittelbar nebeneinander liegende Produkte nacheinander von einer auf die andere Fläche übergeben werden.

Ergänzend ist es denkbar, die beiden Flächen entlang einer beliebigen, nichttranslatorischen Kurve relativ zueinander zu bewegen, um je nach Form der Flächen gezielt bestimmte Durchdringungsmuster zu erzeugen bzw. bestimmte Bereiche der einen Fläche durch die andere hindurch zu bewegen. Durch eine geeignete Kombination von Flächenformen und Bewegungskurve können die auf einer Fläche aufliegenden Produkte in beliebiger Reihenfolge, in wählbaren Gruppen oder Mustern auf die andere Fläche übergegen werden.

Eine besonders zu bevorzugende Ausführungsform der Erfindung sieht vor, dass die Stützfläche und die Positionierfläche eben ausgebildet sind und um einen Winkel α zueinander geneigt sind. Die Neigung verläuft dabei genau in oder genau quer zu der Förderrichtung, in welcher die Produkte zugeführt bzw. bereitgestellt werden. Im ersten Fall (Neigung quer zur Förderrichtung) liegen die oberen Enden der einzelnen Stützelemente auf unterschiedlichen Höhen entlang einer quer zur Förderrichtung verlaufenden, zur Positionierfläche geneigten Geraden. Durch Auf- und Abbewegen der Stützelemente relativ zur Positionierfläche ragt eine beliebig wählbare Teilanzahl (j) der oberen Enden zueinander benachbarter Stützelemente durch die Positionierfläche nach oben hindurch, um dort Produkte von der Positionierfläche abzuheben. Quer zur Förderrichtung auf der Positionierfläche angeordnete weitere (mehrspurig bereitgestellte) Produkte verbleiben dort auf der Positionierfläche, wo die oberen Enden der Stützelemente aufgrund des Gefälles der Stützfläche noch nicht über die Positionierfläche nach oben hinausragen. Bei einer weiteren Aufwärtsbewegung der Stützelemente heben die zusätzlich durch die Positionierfläche hindurchtretenden oberen Enden der Stützelemente weitere Produkte von der Positionierfläche ab, so dass nacheinander mehrere, quer zur Förderrichtung zueinander benachbarten Produkte von der Positionierfläche abgehoben werden können. Bei Abwärtsbewegung der Stützelemente relativ zur Positionierfläche werden die Produkte entsprechend nacheinander auf die Positionierfläche abgesenkt und dort vollständig abgelegt.

Die Stützelemente können auch in Gruppen nebeneinander liegen, die innerhalb jeder Gruppe jeweils gleich hohe Stützelemente aufweisen. Die Stützelemente einer Gruppe treten dann stets gemeinsam durch die Positionierfläche hindurch, um beispielsweise Produkte von der Positionierfläche abheben zu können ohne sie dabei schräg zu stellen. Dies ist zum Beispiel für unverschlossene Flaschen sinnvoll.

Eine alternative Ausführungsform der Erfindung sieht vor, dass die Neigung der Stützfläche relativ zur Positionierfläche in Förderrichtung verläuft anstatt quer dazu. In diesem Fall wird das Gefälle der Stützfläche nicht durch jeweils unterschiedlich hoch aufragende einzelne Stützelemente erzeugt, sondern durch ein in Förderrichtung geneigt verlaufendes oberes Ende der Stützelemente. Diese Ausführungsform ist zum Wiegen sequenziell, also in Förderrichtung hintereinander bereitgestellter Produkte geeignet. Dadurch ist es möglich, dass einige oder alle Stützelemente mit einem ersten Abschnitt der oberen Enden die Positionierfläche nach oben durchragen, während ein zweiter Abschnitt derselben oberen Enden unterhalb der Positionierfläche liegt. Durch Anheben oder Absenken der Stützelemente relativ zur Positionierfläche ragen alle Stützelemente gemeinsam um einen bestimmten Anteil (entspricht dem "ersten Abschnitt") über die Positionierfläche hinaus, so dass sie je nach Hubhöhe entsprechend mehr oder weniger Produkte von der Stützfläche abzuheben bzw. auf diese aufzulegen vermögen. Beide erfindungsgemäße Varianten sind in den Figurenbeispielen näher beschrieben.

Vorzugsweise sind die Stützelemente als schmale, vertikale Bleche (Zinken) ausgebildet, die kammartig nebeneinander liegen und deren obere Enden beispielsweise durch Kufen gebildet werden, welche gemeinsam die Stützfläche ausbilden. Solche Stützelemente weisen eine Längsausrichtung auf, die in oder quer zur Förderrichtung verlaufen kann. Bereits ein oder zwei nebeneinander liegende derartige Stützelemente können ausreichen, um ein oder mehrere Produkte zu tragen, also von der Positionierfläche abzuheben oder auf diese abzusenken. Ergänzend oder alternativ können Stützelemente auch punktförmig ausgebildet sein, so dass sie matrixartig durch entsprechende Aussparungen in der Positionierfläche hindurchragen können. Insbesondere kommen hierfür parallel angeordnete, vertikale schmale Säule bzw. Stäbe unterschiedlicher oder gleicher Länge in Frage, die je nach Länge oder Befestigung untereinander mit ihren oberen Enden eine ebene oder beliebig geformte Stützfläche ausbilden.

Nach einer vorteilhaften Ausführungsform der Erfindung umfasst das Wägesystem ein Transportmittel mit mehreren, parallel zueinander angeordneten Transportelementen zur Auflage und Förderung der Produkte in einer Förderrichtung X. Der Bereich der Auflage der Produkte definiert in Förderrichtung X und in einer dazu quer verlaufenden Breitenrichtung Y die Positionierfläche, wobei die Stützelemente relativ zu den Transportelementen zwischen diesen in einer zur Positionierfläche vorzugsweise senkrechten und vorzugsweise vertikalen Richtung durch die Positionierfläche hindurch auf und ab bewegbar sind. Zwei Ausführungsformen sind hierbei zu unterscheiden:
a) Die Transportelemente erstrecken sich in Förderrichtung, so dass die zwischen den Transportelementen hindurchragenden Stützelemente ebenfalls in Förderrichtung ausgerichtet sind. Die Transportelemente könnten beispielsweise gebildet werden durch mehrere Riemen, die parallel zueinander verlaufen und quer zur Förderrichtung beabstandet sind, um Raum zu lassen für zwischen den Riemen hindurchragende Stützelemente.
b) Die Transportmittel verlaufen quer zur Förderrichtung. Hier kann es sich beispielsweise um in Förderrichtung hintereinander angeordnete Rollen mit quer zur Förderrichtung ausgerichteten Achsen handeln. Auch diese sind zueinander so beabstandet, dass Stützelemente durch die Zwischenräume hindurchragen können.

Beide Varianten a) und b) ermöglichen die Ausbildung einer Stützfläche, welche quer zur Förderrichtung oder in Förderrichtung geneigt ist, indem die Stützelemente mit unterschiedlichen maximalen Höhen ausgebildet sind oder indem deren oberes Ende jeweils mit einem Gefälle ausgebildet ist, welches der Neigung der Stützfläche relativ zur Positionierfläche entspricht.

Die Transportmittel sind über wenigstens einen Antrieb antreibbar, um die zu wiegenden bzw. bereits gewogenen Produkte bereitzustellen bzw. weiter zu transportieren. Der Antrieb kann mehrere parallele Riemen antrieben, indem er beispielsweise an einer von allen Riemen umlaufenen Welle angreift. Auch in Förderrichtung hintereinander liegende Rollen können beispielsweise über eine gemeinsam genutzte Kette oder Rohrmotoren in den Rollen angetrieben werden.

Vorzugsweise sind die Stützelemente in einer zur Positionierfläche senkrechten Richtung auf und ab bewegbar. Vorzugsweise ist diese Richtung zugleich vertikal, d.h. zum Erdmittelpunkt gerichtet, so dass die Positionierfläche horizontal verläuft.

Zur Erzeugung der Relativbewegung zwischen den Stützelementen bzw. der Stützfläche einerseits und den Transportelementen bzw. der durch sie definierten Positionierfläche ist erfindungsgemäß ein Hubantrieb vorgesehen, der zur Anhebung und/oder Absenkung des Transportmittels und/oder der Stützelemente ansteuerbar ist. Erfindungsgemäß kann die Ansteuerung in Abhängigkeit der wählbaren Übergabeanzahl (i) derjenigen Produkte erfolgen, welche im Rahmen der Hubbewegung von einer Fläche auf die andere übergehen sollen.

Zweckmäßigerweise erfolgt die Steuerung der Hubbewegung in Abhängigkeit der Signale, welche die mit dem wenigstens einen Lastaufnehmer gekoppelte Wägezelle ausgibt. So kann das Ende einer Hubbewegung beispielsweise dadurch veranlasst werden, dass sich der von der Wägezelle ausgegebene Gewichtswert entlang eines definierten Hubweges nur unwesentlich oder innerhalb vorgebbarer Toleranzen ändert. Dies kann als Indiz dafür gelten, dass ein Produkt im Rahmen der Hubbewegung vollständig von einer Fläche auf die andere übergeben wurde, ein weiteres Produkt jedoch noch nicht von der Relativbewegung beider Flächen erfasst wurde oder erfasst werden soll. Eine Veränderung oder die relative Konstanz eines Messwerts während einer Relativbewegung von Stützfläche und Positionierfläche zueinander kann daher als Kriterium herangezogen werden für die Steuerung der Relativbewegung bzw. des Hubantriebs. Alternativ oder ergänzend kann die Relativbewegung auch gesteuert werden unter Berücksichtigung Position einzelner Produkte auf einer oder beiden Flächen, wobei die Position etwa durch optischer Erkennungsmittel bestimmt werden kann. So könnte bspw. erkannt werden, wann ein bestimmtes Produkt, eine bestimmte Anzahl von Produkten oder alle Produkte vollständig von einer auf die andere Fläche übergeben wurden, um dann einen Gewichtswert zu ermitteln und/oder die Bewegung der Flächen zueinander zu beenden, umzukehren oder anzuhalten. Ein bestimmter Gewichtswert oder der zeitliche gewichtsverlauf kann auch als Gewichtstrigger verwendet werden, um den Weitertransport der Produkte auszulösen.

Eine vorteilhafte Ausführungsform der Erfindung sieht vor, dass entweder die Positionierfläche oder die Stützfläche genau einen Lastaufnehmer beaufschlagt, während der Hubantrieb entweder die jeweilige vom Lastaufnehmer getragene Fläche oder die jeweils andere Fläche bewegt. Die Relativbewegung der beiden Flächen zueinander kann auf einfache Weise dadurch erzeugt werden, dass eine der beiden Flächen im Wesentlichen ortsfest gehalten wird, während die andere Fläche bewegt wird. Erfindungsgemäß soll es dabei keine Rolle spielen, welche der beiden Flächen vom Hubantrieb bewegt wird und welche nicht. Auch ein Kombinationsantrieb ist denkbar, der beide Flächen relativ zueinander und zugleich auch relativ zu einem ortsfesten Bezugssystem bewegt. Gleichzeitig genügt es in einer einfachsten Ausführungsform, wenn nur eine der beiden Flächen mit einem Lastaufnehmer gekoppelt ist. Auch hier kann es sich um die vom Hubantrieb bewegte oder die im Wesentlichen ortsfest angeordnete Fläche handeln. Denkbar ist also beispielsweise eine Ausführungsform, bei der die von den Stützelementen gebildete Stützfläche sowohl vom Hubantrieb bewegt als auch vom Lastaufnehmer getragen wird, während die Positionierfläche ortsfest bleibt. Dabei könnte der Lastaufnehmer den Hubantrieb tragen, der seinerseits die Stützelemente trägt. Alternativ könnte der Hubantrieb die Wägezelle mit ihrem Lastaufnehmer tragen, an dem wiederum die Stützelemente angeordnet sind.

Auch eine Trennung beider Funktionen ist derart möglich, dass eine der beiden Flächen (genauer: die die Flächen ausbildenden Komponenten), gewogen wird, während die andere Fläche vom Hubantrieb zur Relativbewegung angetrieben wird. ("Ortsfest" bedeutet für eine Fläche daher nicht, dass diese nicht von einem Lastaufnehmer getragen wird, sie kann daher bei Belastung geringfügige Lageänderungen im Raum erfahren. "Ortsfest" definiert lediglich, dass die betreffende Fläche nicht aktiv von einem Hubantrieb bewegt wird.)

Die bevorzugte Ausführungsform des erfindungsgemäßen Wägesystems sieht vor, dass genau eine der beiden Flächen (Stützfläche oder Positionierfläche) mit einem Lastaufnehmer gekoppelt ist, die andere dagegen nicht. Durch Übergabe eines oder mehrerer Produkte von einer auf die andere Fläche ergibt sich eine Differenz der vom Lastaufnehmer aufgenommenen Gewichtskraft, welche der Gewichtskraft der in diesem Schritt übergebenen Produkte (Gesamtgewicht aller in diesem Schritt übergebenen Produkte) entspricht. Wird nur ein Produkt übergeben, entspricht die Differenz der Gewichtskraft genau derjenigen Gewichtskraft des betreffenden Produktes.

Eine weitere Ausführungsform der Erfindung sieht dagegen vor, dass sowohl die Positionierfläche als auch die Stützfläche jeweils mit einem Lastaufnehmer gekoppelt ist, die jeweils zu getrennt voneinander arbeitenden Wägezellen gehören. Damit lässt sich das nachfolgend noch zu beschreibende erfindungsgemäße Wiegeverfahren redundant durchführen, da die Übergabe eines Produkts von einer auf die andere Fläche von beiden Lastaufnehmern unabhängig erfasst wird. Das Wiegeverfahren für alle (Produktanzahl m) Produkte kann mit einer solchen Vorrichtung auch beschleunigt durchgeführt werden, da sich die jeweils erfassten Gewichtskräfte der (k) auf der Positionierfläche aufliegenden Produkte und der (n) auf der Stützfläche aufliegenden Produkte stets zum Gesamtgewicht aller (m) Produkte addieren.

Selbstverständlich können mehrere der vorgenannten Wägesysteme in einer Wägeanlage gemeinsam eingesetzt werden, um den Produktdurchsatz zusätzlich zu erhöhen.

Die besonders vorteilhafte Eigenschaft des erfindungsgemäßen Wägesystems zeigt sich bei der Durchführung eines Wiegeverfahrens mit einem solchen Wägesystem, um Produkte in einer Produktanzahl (m) zu wiegen. Das Wiegeverfahren umfasst dabei zumindest folgende Schritte:
a) Die Produkte in der Produktanzahl (m) werden auf die Positionierfläche und/oder die Stützfläche aufgelegt. Obwohl zu Beginn des Verfahrens zweckmäßigerweise die (m) Produkte entweder alle auf der Positionierfläche oder alle auf der Stützfläche aufliegen, ist auch deren Aufteilung in zwei Teilmengen, wie zuvor beschrieben, denkbar. Nachfolgend soll jedoch der Fall beschrieben werden, bei dem alle (m) Produkte zunächst auf der Positionierfläche aufliegen und entsprechend kein Produkt auf der Stützfläche liegt. Dieser Zustand wird beispielsweise erreicht, nachdem ein Transportmittel mehrere Produkte nebeneinander und/oder hintereinander bis in einen Bereitstellungsbereich transportiert und dort anhält.
   Das Transportmittel kann dazu mehrere Riemen oder Rollen aufweisen, auf denen die Produkte aufliegen und die in Förderrichtung (X) und quer dazu verlaufender Breitenrichtung (Y) die Positionierfläche definieren. Eine Gruppe von Stützelementen, deren obere Enden die Stützfläche definieren, liegt zunächst vollständig unterhalb der Positionierfläche. Ferner sei angenommen, dass die Stützelemente und die von ihr definierte Stützfläche von einem Lastaufnehmer getragen werden, der eine auf die Stützfläche einwirkende Gewichtskraft in eine Wägezelle einleitet, um einen der Gewichtskraft entsprechenden Messwert auszugeben.
b) Über einen die Stützelemente bewegenden Hubantrieb wird dann die Stützfläche relativ zur Positionierfläche in vertikaler Richtung nach oben angehoben, wo sie ein erstes Produkt von der Positionierfläche vollständig abheben, bis es seine Gewichtskraft ausschließlich in die Stützfläche bzw. die Stützelemente und den Lastaufnehmer einleitet. Diese Bewegung, in der wenigstens ein Produkt von einer auf die andere Fläche übergeben wird, kann auch als Teilbewegung bezeichnet werden. Aus der von der Wägezelle erfassten Differenz der Gewichtskraft vor und nach Übergabe des Produktes kann dessen Gewicht bestimmt werden.
   Wie zuvor erläutert, lässt sich die vollständige Übergabe eines Produktes von einer auf die andere Fläche daran erkennen, dass sich der erfasste Gewichtswert in einem definierten engen Zeitraum trotz weiterer Aufwärtsbewegung der Stützfläche nicht wesentlich ändert.

Die Produkte können auf verschiedene Weise bereitgestellt oder weitertransportiert werden. Außer Riemen oder Bändern können auch Greifer, Rutschen, Roboter, Sauger etc, Verwendung finden.

Die Stützelemente können auch als Exzenterelemente auf einer gemeinsamen Achse angeordnet sein, wobei benachbarte Exzenterelemente oder Gruppen davon im Drehwinkel um die Achse versetzt zueinander angeordnet sind. Durch Drehen der Achse können die Exzenterelemente nacheinander durch die Positionierfläche dringen und einzelne Produkte von ihr abheben. Bei fortgesetzter Drehung werden nicht nur weitere Produkte abgehoben, die zuvor von den Exzenterelementen aufgenommenen Produkte werden vorteilhaft zugleich tangential zur Drehrichtung, das heißt in Förderrichtung (X), weitergefördert.

Als besonderer Vorteil gegenüber dem Stand der Technik kann anschließend ein weiteres Produkt von der Positionierfläche abgehoben und auf die Stützfläche übergeben werden, indem die Stützelemente ihre Aufwärtsbewegung fortsetzen, das nächste Produkt untergreifen und vollständig abheben. Erneut lässt sich aus der erfassten Differenz der Gewichtswerte auf das Gewicht des in dieser nächsten Teilbewegung übergebenen Produktes schließen. In weiterer Aufwärtsbewegung der Stützelemente kann anschließend in einer weiteren Teilbewegung das nächste Produkt von der Stützfläche übernommen werden und so weiter. Anders als im Stand der Technik, bei dem zu Wiegezwecken immer nur alle zu wiegenden Produkte gleichzeitig angehoben oder abgesetzt werden können, gestattet die erfindungsgemäße Ausgestaltung der Stützelemente die gezielte Übergabe von einer Auswahl von Produkten (vorzugsweise von genau einem Produkt) für das Wiegen, während die anderen Produkte auf ihrer jeweiligen Fläche verbleiben. So lassen sich mit nur einer Wägezelle und einem Hubantrieb die einzelnen Gewichte einer ganzen Produktanzahl (m) von Produkten in aufeinander folgenden Teilbewegungen vollständig erfassen, wodurch Kosten eingespart werden und beschleunigt gewogen werden kann.

Zweckmäßigerweise lassen sich die einzelnen Teilbewegungen zu einer kontinuierlichen Wiegebewegung zusammenfassen, indem im Rahmen einer einzigen Bewegung der Stützfläche relativ zur Positionierfläche nacheinander alle Produkte von der einen auf die andere Fläche übergehen. So könnte der die Relativbewegung erzeugende Hubantrieb aus einer niedrigsten bis in eine höchste Position verfahren werden, wobei während dieser Bewegung die Stützfläche die Positionierfläche so durchdringt, dass dabei alle Produkte nacheinander von der Positionierfläche abgehoben bzw. von der Stützfläche übernommen werden.

Zwischen den einzelnen Teilbewegungen kann die Relativbewegung der Flächen zueinander angehalten werden (statisches Wiegen). Dies kann geschehen, um auf das Einschwingen eines Messwertes zu warten. Alternativ kann auch ein fester Zeitwert vorgegeben werden, nach dessen Ablauf der dann erfasste Messwert als genau genug vorausgesetzt und verarbeitet wird bzw. als zu ungenau gekennzeichnet oder verworfen wird.

Alternativ können sich die einzelnen Teilbewegungen auch unmittelbar aneinander anschließen, so dass die Relativbewegung der Flächen auch kontinuierlich, also unterbrechungsfrei erfolgen.

Die kontinuierliche Bewegung kann monoton, also ohne Richtungsumkehr, aber mit variabler Geschwindigkeit erfolgen (z.B. verlangsamte Geschwindigkeit zum Wiegezeitpunkt). Sie kann jedoch insbesondere auch mit konstanter Geschwindigkeit erfolgen. Ein wiederholtes Auf- und Abbewegen der einen Fläche relativ zur anderen, um alle (m) Produkte ausschließlich vereinzelt zu wiegen, ist erfindungsgemäß nicht erforderlich. Es ist nicht erforderlich, die Produkte im Produktstrom zu vereinzeln (zu verziehen), so dass stets nur ein Produkt während der Wägung den Lastaufnehmer belastet.

Das Verfahren erlaubt es vorteilhaft auch, die zu wiegenden Produkte unmittelbar weiter zu transportieren, nachdem sie in einer Wiegebewegung vollständig von einer auf die andere Fläche übergegen wurden, also ohne sie zunächst wieder auf ihre Ausgangsfläche zurückzugeben. Dann könnte die Bereitstellung der Produkte bspw. auf der Positionierfläche erfolgen, und nach Übergabe auf die Stützfläche könnten die Produkte direkt von dort unter Zeitersparnis weiter transportiert werden, bspw. per Greifer, Roboter, Schieber, Rutsche etc.

Weiterhin könnte die nachfolgende Produktgruppe auf der Stützfläche bereitgestellt werden, so dass die nächste Wiegebewegung in umgekehrter Hubbewegung zur vorherigen Wiegebewegung erfolgen kann und die Produkte nach Abschluss dieser Wiegebewegung auf der Positionierfläche zu liegen kämen. Der Abtransport würde für diese Gruppe dann von der Positionierfläche erfolgen. Da mit jedem Hub bzw. Gegenhub gewogen werden kann, lässt sich das Wiegen insgesamt beschleunigen.

Das vorgenannte Verfahren lässt sich zusätzlich dadurch beschleunigen, dass beide Flächen jeweils von einem separaten Lastaufnehmer mit zugehöriger Wägezelle getragen werden. In diesem Fall genügt es, wenn alle Produkte mit Ausnahme des letzten von einer Fläche auf die andere übergeben werden, da sich die Gewichtskraft des letzten auf der ursprünglichen Fläche verbliebenen Produktes unmittelbar über die zugehörige Wägezelle ablesen lässt.

Obwohl es zweckmäßig erscheint, das erfindungsgemäße Verfahren so durchzuführen, dass nacheinander alle zu wiegenden Produkte von einer auf die andere Fläche übergeben werden, muss dies nicht zwingend erfolgen. Denkbar ist es auch, nur für einen Teil der (m) Produkte deren jeweiliges Gewicht zu erfassen, während für die verbliebenen Produkte keine solche Gewichtserfassung erfolgt. Dies kann zweckmäßig sein, um stichprobenartig Gewichtswerte zu erfassen, die Einhaltung eines Mindestgewichts für eine Gruppe von Produkten sicherzustellen etc. Auch ist es möglich, anfangs nicht alle Produkte komplett auf der Positionierfläche oder der Stützfläche bereitzustellen (m=n oder m=k). Stattdessen ist je nach den Bereitstellungsmöglichkeiten für die Produkte auch die Aufteilung der Produktanzahl (m) in zwei Teilmengen (k, n) auf der Positionierfläche und der Stützfläche denkbar. Dann könnten durch Relativbewegung in einer ersten Richtung zunächst nacheinander alle (n) Produkte von der Stützfläche auf die Positionierfläche übergeben werden (k=m), um anschließende in umgekehrter Bewegung alle Produkte komplett auf die Stützfläche zu übergeben. Natürlich kann die Beladung der Flächen bzw. deren Relativbewegung auch umgekehrt erfolgen.

Das vorgenannte Verfahrensbeispiel ging davon aus, dass die Stützelemente und die von ihnen gebildete Stützfläche von einem Hubantrieb bewegbar und zugleich Vorlast für den Lastaufnehmer der Wägezelle sind. Allerdings ist dies nur eine Ausführungsvariante, da anstelle der Stützfläche ebenso gut die Positionierfläche anhebbar oder absenkbar ausgebildet sein kann oder ihrerseits mit einem Lastaufnehmer gekoppelt sein kann, während die Stützfläche im Wesentlichen ortsfest bleibt.

Auch die Neigung der Stützfläche relativ zur Positionierfläche kann beliebig gewählt werden, wobei eine vorteilhafte Ausführung eine Neigung genau in Förderrichtung oder genau quer dazu vorsieht, wie die Figurenbeispiele verdeutlichen. Eine besondere Ausführungsform des erfindungsgemäßen Wägesystems und des mit diesem durchzuführenden Verfahrens sieht jedoch vor, dass die Stützfläche relativ zur Positionierfläche sowohl in Förderrichtung als auch quer dazu eine Neigung aufweist. Dies führt dazu, dass während der Relativbewegung beider Flächen zueinander gleichzeitig oder nacheinander Produkte von einer Fläche auf die andere übergehen, die sowohl nebeneinander als auch hintereinander liegend (mehrspurig und sequenziell), also matrixartig in einem zweidimensionalen Feld bereitgestellt werden. Durch geschickte Anordnung der Produkte und eine darauf aufgestimmte Form der beiden Flächen wird es dann möglich, das Gewicht jedes einzelnen Produktes zu ermitteln, selbst wenn diese Produkte in einer zweidimensionalen Anordnung bereitgestellt werden. Das ist dann der Fall, wenn die aufeinander folgenden Teilbewegungen jeweils genau ein weiteres Produkt von einer auf die andere Fläche überführen, wobei dieses Produkt insbesondere auf der gleichen X- oder Y-Position liegen kann wie das zuvor übertragene Produkt. Durch dieses Verfahren lässt sich eine große Produktanzahl (m) von matrixartig angeordneten Produkten in einer einzigen Relativbewegung vollständig erfassen.

Die Produktanzahl (m) der zu wiegenden Produkte kann Produkte unterschiedlicher geometrischer Gestalt umfassen, so dass eine Anpassung an bestimmte Produktformen nicht nötig ist. Durch die Relativbewegung zwischen Positionierfläche und Stützfläche wird das jeweilige Produkt mit seiner Unterseite von einer auf die andere Fläche übergeben, ohne dass die weiteren Abmessungen des Produktes von Bedeutung sind. Für die erfindungsgemäße Funktion ist lediglich erforderlich, dass das Produkt (genauer: seine Gewichtskraft) vollständig von einer Fläche auf die andere übertragen werden kann. Diese Formatfreiheit erlaubt den vielseitigen Einsatz des Wägesystems auch für unterschiedlich dimensionierte Produkte.

Auch die räumliche Ausrichtung der Produkte kann frei gewählt werden. Das heißt, dass ein Produkt in einer beliebigen Drehlage oder auf einer beliebigen seiner Seitenflächen bereitgestellt werden kann. Spezielle Ausrichtmittel können vorteilhaft entfallen.

Ein weiterer Vorteil der Erfindung liegt darin, dass die Produkte einzeln gewogen werden können, obwohl sie gruppenweise auf der Positionierfläche oder der Stützfläche bereitgestellt werden. Die Produkte sind vor Beginn des Wiegevorgangs in einer definierten räumlichen Zuordnung zueinander auf der Positionierfläche oder der Stützfläche angeordnet, insbesondere betreffend ihre Anordnung zueinander in bzw. quer zur Förderrichtung. Diese Anordnung wird auch während des Wiegevorgangs im Wesentlichen beibehalten, abgesehen von einer möglichen geringfügigen seitlichen Verkippung eines Produktes beim Übergang von einer Ebene auf die andere. Anders als im Stand der Technik wird keines der Produkte zum Wiegen aus der Gruppe räumlich isoliert in dem Sinne, dass insbesondere sein Abstand in horizontaler Richtung zu anderen Produkten der Gruppe verändert werden muss, um es wiegen zu können.

Im Rahmen des Wiegeprozesses werden die Produkte zwar teilweise oder vollständig von der Positionierfläche auf die Stützfläche oder umgekehrt übergeben, die horizontalen Abstände der Produkte untereinander und zum Produktstrom werden jedoch nicht wesentlich verändert. Dies gilt zum einen, wenn der Wiegeprozess als abgeschlossen gilt sobald alle Produkte von ihrer ursprünglichen auf die jeweils andere Fläche übergeben worden sind. Insbesondere trifft dies jedoch auch dann zu, wenn die Produkte, nachdem sie auf die andere Fläche übergeben wurden, wieder auf ihre Ausgangsfläche zurücküberführt werden. Das kann sinnvoll sein, wenn die Produkte zunächst mit Hilfe von Transportelementen auf der Positionierfläche bereitgestellt werden, anschließend nacheinander mittels der Stützfläche abgehoben werden zur Erfassung der einzelnen Gewichtswerte und schließlich in umgekehrter Bewegung wieder auf der Positionierfläche abgelegt werden, um sie anschließend weitertransportieren zu können. Die Anordnung der Produkte zueinander vor und nach diesem Wiegeprozess ist vorteilhaft unverändert. Daher kann eine ganze Gruppe (m) von Produkten einzeln gewogen werden, ohne dass die Produkte ihre Position zueinander verändern. Im Stand der Technik dagegen, gerade im Start-Stopp-Verfahren, werden die zu wiegenden Produkte häufig aus einem Produktstrom vereinzelt, gewogen und anschließend in den Produktstrom zurückgeführt, wobei sich der Abstand der Produkte untereinander vor dem Wiegevorgang regelmäßig stark verändert und entsprechend kontrolliert bzw. korrigiert werden muss.

Vorteilhafterweise ist das erfindungsgemäße Wägesystem und das zugehörige Verfahren dazu geeignet, Produkte zu wiegen, die in beliebiger Anordnung auf der Positionierfläche und/oder der Stützfläche bereitgestellt werden (frei wählbare Auflageposition). Insbesondere die seitlichen Abstände der einzelnen Produkte zueinander können frei gewählt werden. Somit können Produkte frei auf den Flächen platziert werden und einige davon näher beieinander liegen als andere. Erreicht wird dies durch die insgesamt eine Fläche ausbildenden Auflagebereiche. Spezielle Aufnahmemittel, um die Produkte an genau vordefinierten Orten zu erfassen und zu wiegen, können vorteilhaft entfallen. Ferner gestattet das Wägesystem durch das Prinzip der sich durchdringenden Flächen bedarfsweise, dass ein Produkt auf die andere Fläche und wieder derart zurückgeführt wird, dass es auf dieser Ausgangsfläche an einer von seiner ursprünglichen Position abweichenden Position zu liegen kommt. Spezielle Aufnahmemittel für die Produkte sind also vollständig überflüssig und vereinfachen das System erheblich.

Das erfindungsgemäße Wägesystem und das zugehörige Verfahren soll nachfolgend anhand von Figurenbeispielen näher erläutert werden. Dabei zeigt
- Fig. 1: eine schematische Schnittdarstellung eines erfindungsgemäßen Wägesystems,
- Fig. 2: eine Teilansicht der Stützelemente,
- Fig. 3: eine perspektivische Teilansicht der Stützelemente,
- Fig. 4 bis 7: den Ablauf einer Wiegebewegung,
- Fig. 8: eine alternative Ausführungsform eines erfindungsgemäßen Wägesystems, und
- Fig. 9 und 10: den Ablauf einer Wiegebewegung mit einem Wägesystem nach Fig. 8.

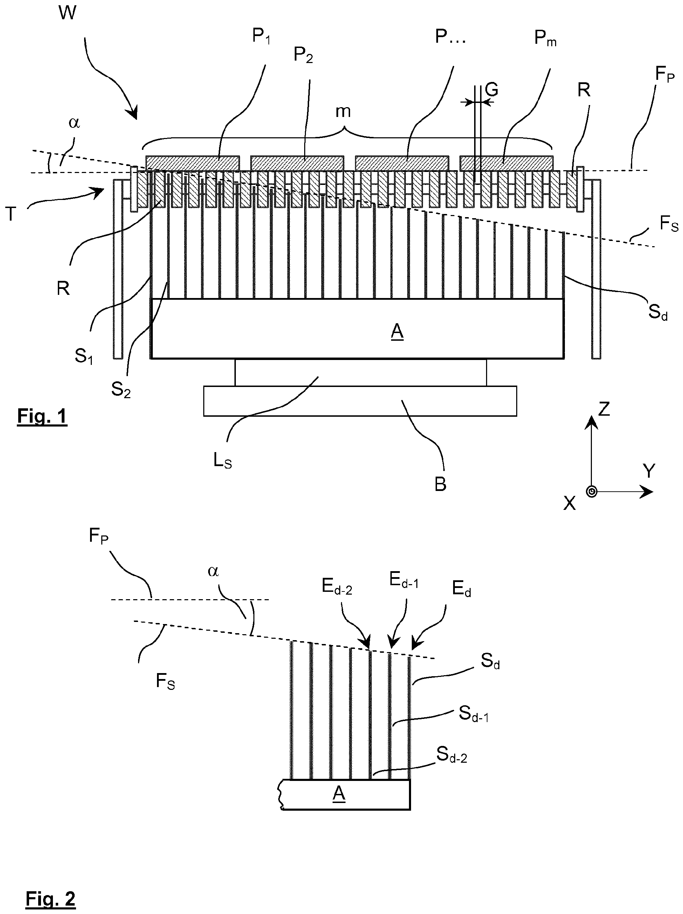

Fig. 1 zeigt in schematischer Schnittdarstellung die wesentlichen Komponenten eines erfindungsgemäßen Wägesystems (W). Das Wägesystem (W) umfasst ein Transportmittel (T), zu welchem mehrere parallel zueinander verlaufende Riemen (R) gehören.

Die nebeneinander liegenden Riemen (R) sind über einen nicht näher dargestellten Antriebsmechanismus antreibbar, um auf dem Riemen (R) aufliegende Produkte (P₁-Pₘ) in einer Förderrichtung (X) zu fördern (in Fig. 1 verläuft die Förderrichtung (X) senkrecht zur Zeichenebene). Die Oberseite der Riemen (R) bilden eine Positionierfläche (F_{P}) aus, auf der eine zu wiegende Produktanzahl (m) von Produkten (P) bereitgestellt wird. Im Ausführungsbeispiel nach Fig. 1 werden vier Produkte (P) mehrspurig bereitgestellt, liegen also in einer zur Förderrichtung (X) quer verlaufenden Breitenrichtung (Y) nebeneinander.

Das Transportmittel (T) ist über einen nicht dargestellten Hubantrieb in vertikaler Richtung (Z) auf und ab bewegbar, so dass die Riemen (R) mit den darauf aufliegenden Produkten (P) entsprechend mitbewegt werden. Die Riemen (R) sind zueinander in Breitenrichtung (Y) derart beabstandet, dass zwischen benachbarten Riemen jeweils ein schmaler Spalt (G) bestehen bleibt.

Unterhalb der Positionierfläche (F_{P}) ist eine Halterung (A) vorgesehen, welche eine Gesamtanzahl (d) von vertikal aufragenden Stützelementen (S) trägt. Die Stützelemente (S) sind als schmale Bleche (hier in Form einzelner Zinken) ausgeführt, die in Förderrichtung (X) parallel zueinander verlaufen und in Breitenrichtung (Y) so zueinander beabstandet sind, dass jedes Stützelement berührungsfrei durch einen der Spalte (G) zwischen den Riemen (R) hindurchragen kann. Die die Stützelemente (S) tragende Halterung (A) ist ihrerseits mit einem Lastaufnehmer (Ls) gekoppelt, der die Kraft in eine schematisch dargestellte Wägezelle (B) einleitet. Die Wägezelle (B) ist zur Erfassung der in den Lastaufnehmer (Ls) eingeleiteten Gewichtskraft und zur Ausgabe eines zugehörigen Messwertes ausgebildet.

Wie in Fig. 2 in einer vergrößerten Ansicht zu sehen ist, liegen die Stützelemente (S) durchnummeriert von 1 bis d nebeneinander. Jedes Stützelement (S) weist ein zugehöriges oberes Ende (E) auf. Im Ausführungsbeispiel gemäß Fig. 1 bis 6 erstrecken sich die oberen Enden (E₁-E_{d}) jedes Stützelements (S₁ - S_{d}) in Förderrichtung (X). Gemeinsam bilden die oberen Enden (E₁-E_{d}) eine Stützfläche (F_{S}) aus, die zur Auflage eines oder mehrerer Produkte (P₁-Pₘ) ausgebildet ist. Die Stützelemente (S₁-S_{d}) sind mit einer in Fig. 2 von links nach rechts abnehmenden Höhe ausgebildet, so dass die von den oberen Enden (E₁-E_{d}) gemeinsam gebildete Stützfläche (F_{S}) gegenüber der Positionierfläche (F_{P}) um einen Winkel α geneigt ist.

Fig. 1 zeigt, dass die Stützelemente (S₁-S_{d}) teilweise in die Spalte (G) zwischen den Riemen (R) des Transportmittels (T) hineinragen. Das erste Stützelement (S₁) liegt dabei mit seinem oberen Ende (E₁) unmittelbar unter dem Produkt (P₁), ohne dieses jedoch zu berühren. In dem in Fig. 1 dargestellten Zustand ruhen alle Produkte (P₁-Pₘ) vollständig auf der Positionierfläche (F_{P}) und leiten ihre Gewichtskraft ausschließlich in die Riemen (R) bzw. das Transportmittel (T) ein.

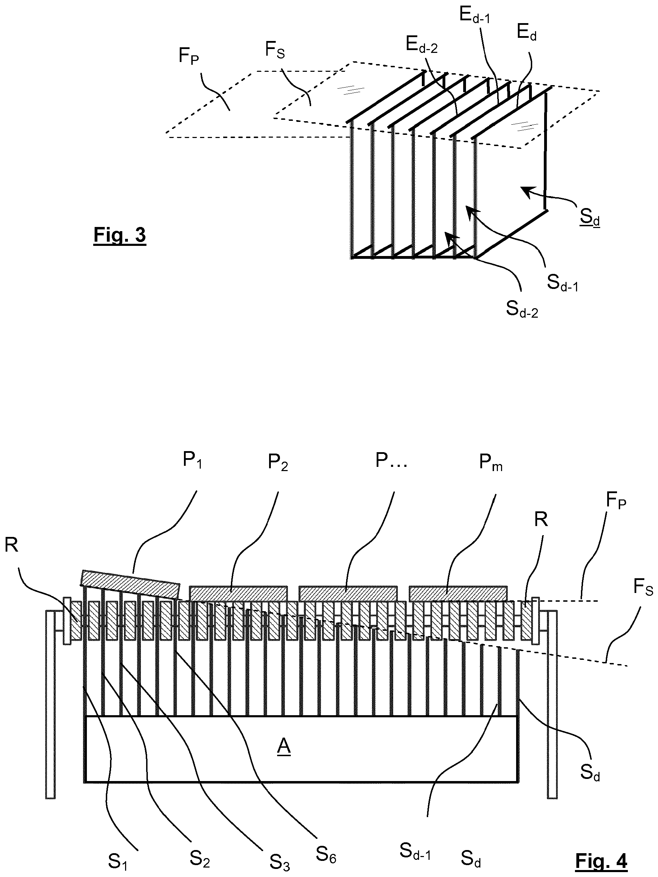

Fig. 3 zeigt eine vereinfachte perspektivische Ansicht einiger Stützelemente. Die vertikal aufragenden Stützelemente (S₁-S_{d}) bilden mit ihren oberen Enden (E₁-E_{d}) die Stützfläche (F_{S}). Aufgrund der abnehmenden Höhe der einzelnen Stützelemente (S) besteht zwischen der Stützfläche (F_{S}) und der Positionierfläche (F_{P}) eine Neigung, die durch den in Fig. 2 gezeigten Winkel α beschrieben wird.

Die (in Fig. 3 nicht gezeigte) Halterung (A) mit ihren Stützelementen (S) ist relativ zum Transportmittel (T) in einer zur Breitenrichtung (Y) und zur Förderrichtung (X) senkrechten Richtung (Z) verfahrbar. Eine solche Bewegung führt dazu, dass die oberen Enden (E₁-E_{d}) der Stützelemente zwischen den Riemen (R) hindurch nach oben oder nach unten verschoben werden. Bei einer Aufwärtsbewegung der Stützelemente relativ zum Transportmittel (T), wie in Fig. 4 dargestellt, untergreifen die ersten Stützelemente das erste Produkt (P₁) und heben es von der Positionierfläche (F_{P}) ab. Damit wird die Gewichtskraft des Produktes (P₁) über die dieses Produkt stützenden Stützelemente in den (hier nicht gezeigten) Lastaufnehmer (L_{S}) eingeleitet, wobei in Fig. 4 genau der Zustand dargestellt sein soll, in dem das Produkt (P₁) vollständig von der Positionierfläche (F_{P}) abgehoben ist und nur noch auf den oberen Enden (E) der zugehörigen Stützelemente (S₁-S₆) aufliegt. Fig. 4 zeigt damit das Ende einer ersten Teilbewegung, in der genau ein Produkt von der Positionierfläche (F_{P}) auf die Stützfläche (F_{S}) übertragen bzw. übergeben wurde. Aus der Differenz der von der Wägezelle ausgegebenen Messwerte vor und nach dieser Teilbewegung lässt sich das Gewicht des Produktes (P₁) ermitteln. Zu diesem Zeitpunkt ruhen die weiteren Produkte (P₂-Pₘ) unverändert auf der Positionierfläche (F_{P}).

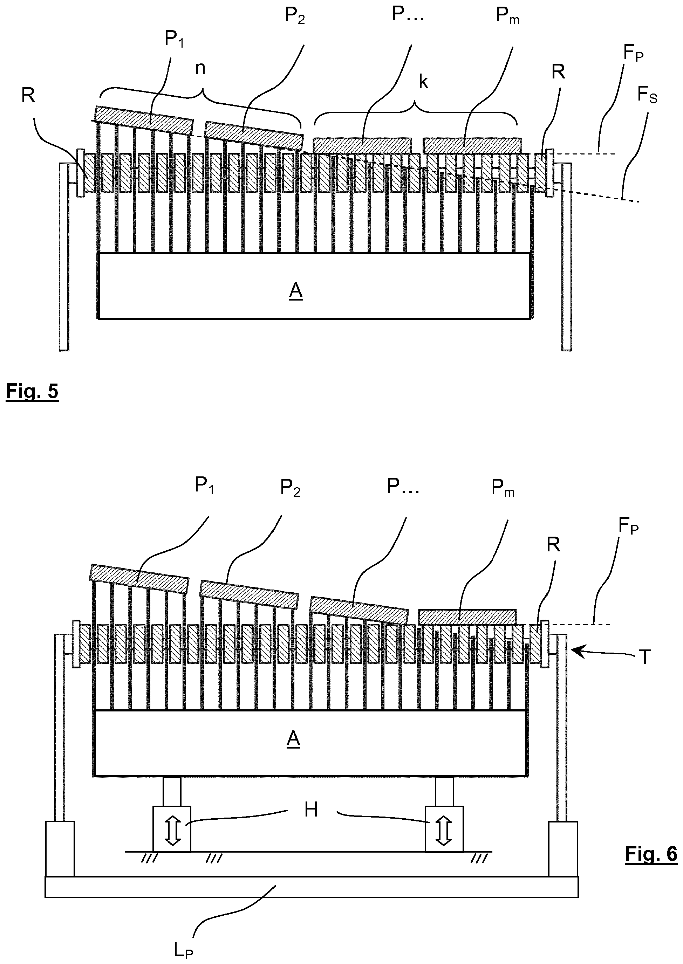

Fig. 5 zeigt die Situation, nach der die Halterung (A) in einer weiteren Teilbewegung relativ zum Transportmittel (T) weiter angehoben wurde. Dabei wurde zusätzlich zum ersten Produkt (P₁) auch das zweite Produkt (P₂) von den Stützelementen (S) vollständig aufgenommen, so dass dessen Gewichtskraft zusätzlich in den in Fig. 5 nicht mehr dargestellten Lastaufnehmer (L_{S}) eingeleitet wird. Erneut lässt sich durch Differenzenbildung der am Wägesystem ausgegebenen Messwerte das Gewicht des zweiten Produkts (P₂) ermitteln.

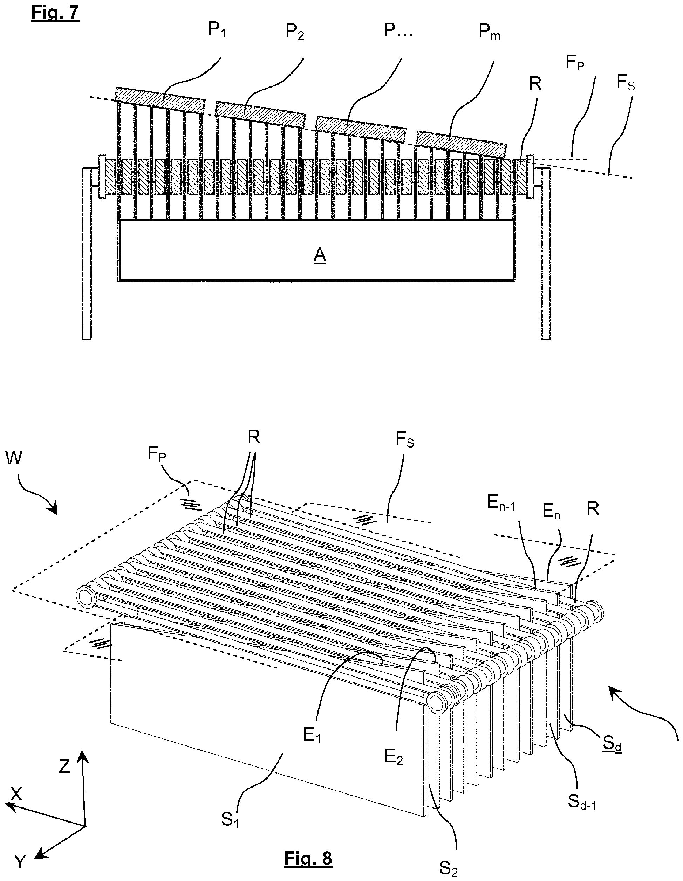

Die Figuren 6 und 7 zeigen die Situation nach zwei weiteren Teilbewegungen, in denen weitere Produkte (P) von der Positionierfläche (F_{P}) an die Stützfläche (F_{S}) bzw. die zugehörigen Stützelemente übergeben wurden. Für den in Fig. 7 dargestellten Fall, bei dem die Produktanzahl (m) der zu wiegenden Produkte vier beträgt, sind nach vier aufeinander folgenden Teilbewegungen alle Produkte von der Positionierfläche (F_{P}) auf die Stützfläche (F_{S}) übergegangen und belasten nun ausschließlich den in Fig. 1 beispielhaft dargestellten Lastaufnehmer (L_{S}). Alle Einzelgewichte der Produkte sind damit bekannt. Es ist leicht zu sehen, dass die einzelnen Teilbewegungen, die in den Figuren 4-7 dargestellt sind, auch zu einer kontinuierlichen Wiegebewegung zusammengefasst werden können, indem die Halterung (A) in einer einzigen Bewegung relativ zum Transportmittel (T) von unten nach oben angehoben wird, wodurch sich das Einzelgewicht aller Produkte (P₁-Pₘ) zügig und genau erfassen lässt.

Durch eine anschließend umgekehrt verlaufende Bewegung, in der die Halterung (A) relativ zum Transportmittel (T) wieder abgesenkt wird, werden die einzelnen Produkte (P₁-Pₘ) in umgekehrter Reihenfolge wieder auf der Positionierfläche (F_{P}) abgelegt, wonach sie durch Antrieb der Riemen (R) gemeinsam weitergefördert werden können und um eine neue Gruppe von Produkten auf der Positionierfläche (F_{P}) bereitstellen zu können.

Alternativ könnten die Produkte, anstatt sie wieder auf die Positionierfläche (F_{P}) abzusenken, auch in der angehobenen Position direkt von der Stützfläche (F_{S}) entnommen bzw. weiter transportiert werden, beispielsweise mittels eines Schiebers oder Greifers. Weiterhin wäre es möglich, eine neue zu wiegende Gruppe von Produkten auf der angehobenen Stützfläche (F_{S}) zu positionieren, um durch anschließendes Absenken sofort eine weitere Wiegebewegung durchführen zu können. Dadurch ergäbe sich eine deutliche Zeitersparnis für den gesamten Wiegeablauf, da mit jedem Hub und Gegenhub jeweils eine Wiegebewegung durchführbar wäre.

In Fig. 1 war der Fall dargestellt, dass die Stützelemente (S) bzw. die von ihnen gebildete Stützfläche (F_{S}) als Vorlast von einem Lastaufnehmer (L_{S}) getragen werden. Fig. 6 dagegen zeigt beispielhaft eine andere Variante, bei der stattdessen das Transportmittel (T) und die von seinen Riemen (R) gebildete Positionierfläche (F_{P}) als Vorlast auf einem Lastaufnehmer (L_{P}) aufliegen. Ein Hubmechanismus (H) dient hier dazu, die Halterung (A) mit den Stützelementen (S) relativ zur Positionierfläche (F_{P}) auf und ab zu bewegen. In diesem Fall wird die Gewichtskraft der einzelnen Produkte nicht über die Stützfläche (F_{S}) erfasst, sondern über die Positionierfläche (F_{P}). In einer der Fig. 1 entsprechenden Ausgangssituation würde dann zunächst das Gesamtgewicht aller Produkte (P₁-Pₘ) von dem die Positionierfläche tragenden Lastaufnehmer (L_{P}) aufgenommen. Im Rahmen der Aufwärtsbewegung der Stützfläche (Fs) reduziert sich dann mit jeder Teilbewegung, bei der ein weiteres Produkt von den Stützelementen aufgenommen wird, das vom Lastaufnehmer (L_{P}) aufgenommene Gesamtgewicht, wobei sich wieder durch Differenzenbildung das Gewicht jedes einzelnen Produktes ermitteln lässt.

Erforderlichenfalls können Hubantrieb und Lastaufnehmer auch mit derselben Fläche gekoppelt werden, um einerseits das Gewicht dieser Fläche zu erfassen und sie andererseits aktiv zu bewegen. Dazu könnte der Hubantrieb gemeinsam mit dem Lastaufnehmer Vorlast bilden für die Wägezelle. Alternativ kann die Wägezelle samt Lastaufnehmer vom Hubantrieb getragen werden. Die jeweils andere Fläche kann dann ortsfest angeordnet werden.

In den Ausführungsformen gemäß Fig. 1-7 besteht die Neigung der Stützfläche (Fs) ausschließlich quer zur Förderrichtung (X), so dass eine gedachte Schnittkante zwischen beiden Ebenen in Förderrichtung (X) verläuft.. Die Figuren 8-10 betreffen dagegen eine abgewandelte Ausführungsform, bei der die Stützfläche (Fs) in Förderrichtung (X) gesehen zur Positionierfläche (F_{P}) geneigt ist. In diesem Fall sind alle Stützelemente (S₁-S_{d}) gleich ausgebildet, wobei ihr jeweiliges oberes Ende (E₁-E_{d}) in Förderrichtung schräg verläuft. Die aus allen oberen Enden (E₁-E_{d}) gemeinsam gebildete Stützfläche (Fs) erhält so ihre Neigung in Förderrichtung (X).

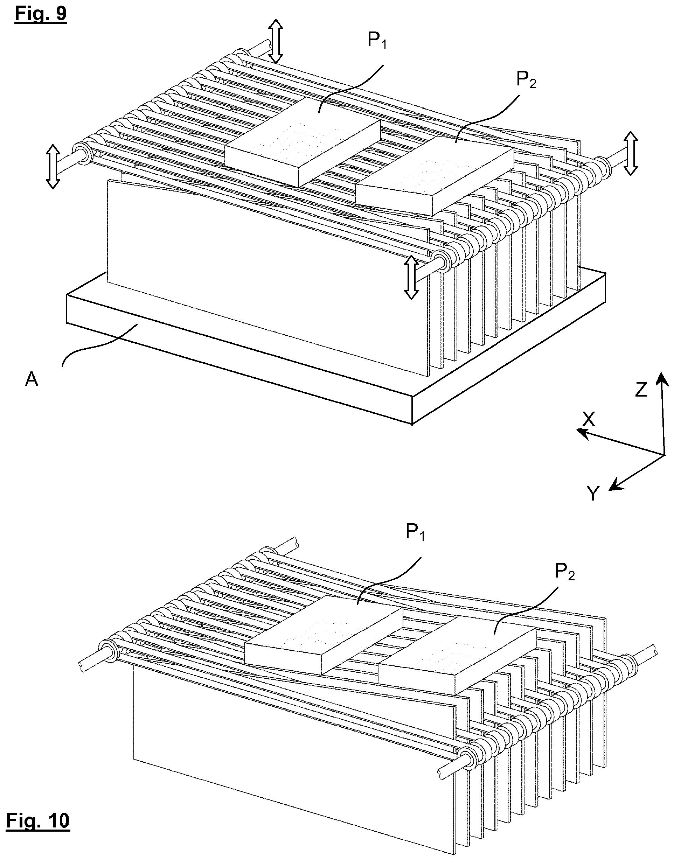

In Fig. 8 sind die Stützelemente (S) vereinfacht dargestellt in einer Anordnung, in der ein Abschnitt ihrer oberen Enden bereits durch die von den Riemen (R) des Transportmittels (T) gebildete Positionierfläche (F_{P}) hindurchragt. Ein weiterer Abschnitt aller Stützelemente (S) liegt dagegen noch unterhalb der Positionierfläche (F_{P}) (beide Flächen (F_{P}) und (F_{S}) sind durch gestrichelte Linien angedeutet). Die Systematik des Wiegeprozesses entspricht derjenigen der Figuren 1-7, wie beispielhaft anhand der Figuren 9 und 10 zu sehen ist. Wiederkehrende Bezugszeichen sind bei diesen Figuren aus Gründen der Übersichtlichkeit weggelassen.

Fig. 9 zeigt den Fall, dass ein Produkt (P₂) bereits von den oberen Enden der Stützelemente, also von der Stützfläche (F_{S}), aufgenommen ist. Das Produkt (P₁) dagegen ruht noch auf der Positionierfläche (F_{P}). Anders als beim Ausführungsbeispiel gemäß Fig. 1 bis Fig. 7 sind die Produkte hier in Förderrichtung hintereinander liegend angeordnet, sie werden also sequenziell bereitgestellt. Bei einer Bewegung der Positionierfläche (F_{P}) relativ zur Stützfläche (F_{S}) gelangen so nacheinander die in Förderrichtung (X) hintereinander liegenden Produkte von der Positionierfläche (F_{P}) auf die Stützfläche (F_{S}) oder umgekehrt.

In Fig. 9 zeigen kleine Doppelpfeile an, dass das Transportmittel (T) mit seinen Riemen (R) in vertikaler Z-Richtung auf und ab bewegbar sein soll durch einen nicht näher dargestellten Hubantrieb. Die Stützelemente (S) dagegen ruhen auf einem schematisch dargestellten Lastaufnehmer (L_{S}).

Fig. 10 zeigt gegenüber Fig. 9 den Fall, dass beide Produkte (P₁, P₂) von der Stützfläche (F_{S}) getragen werden und die Positionierfläche (F_{P}) unbelastet ist. Eine anschließend umgekehrt verlaufende Relativbewegung würde die beiden Produkte wieder vollständig auf die Riemen (R) des Transportmittels ablegen, um sie weiter zu transportieren und neue zu wiegende Produkte bereitzustellen.

Die in den Figuren 1 bis 10 gezeigten Ausführungsbeispiele sahen vor, dass sich die oberen Enden der Stützelemente jeweils in Förderrichtung (X) erstrecken und dabei durch Spalte (G) ragen können, die von Riemen oder anderen Antriebsmitteln ausgebildet sind, die sich ebenfalls in Förderrichtung (X) erstrecken. Das erfindungsgemäße Wiegeprinzip lässt sich jedoch in gleicher Weise umsetzen mit quer zur Förderrichtung (X) ausgerichteten Stützelementen, wenn das Transportmittel beispielsweise einzelne Transportrollen aufweist, die in Förderrichtung (X) hintereinander liegen und sich in Breitenrichtung (Y) erstrecken (nicht dargestellt). Die zwischen diesen Rollen entstehenden Spalte dienen dann dazu, die oberen Enden der Stützelemente durch die von den Rollen gemeinsam gebildete Positionierfläche hindurchtreten zu lassen, um wahlweise Produkte von dieser Fläche abzuheben oder darauf abzulegen. Auch bei quer zur Förderrichtung verlaufenden Stützelementen kann die von den Stützelementen gebildete Stützfläche ein Gefälle in Förderrichtung (X) oder quer dazu (in Breitenrichtung (Y)) oder beides gleichzeitig aufweisen. Beim Anheben bzw. Absenken der Stützelemente relativ zu den Rollen werden dann je nach Neigungsrichtung der Stützfläche nacheinander die in Förderrichtung oder die in Breitenrichtung hintereinander oder beliebig liegenden Produkte angehoben bzw. abgesenkt.

### Bezugszeichenliste

- α: Winkel zwischen Positionierfläche und Stützfläche
- A: Halterung für die Stützelemente
- B: Wägezelle
- d: Gesamtanzahl der Stützelemente
- E₁-E_{d}: obere Enden der Stützelemente S
- F_{P}: Positionierfläche
- F_{S}: Stützfläche
- G: Spalt
- H: Hubantrieb
- i: Übergabeanzahl
- j: Teilanzahl (von Enden) der Stützelemente
- k: Menge der Produkte auf der Positionierfläche
- Lₚ: Lastaufnehmer für die Positionierfläche
- L_{S}: Lastaufnehmer für die Stützfläche
- m: Produktanzahlder zu wiegenden Produkte
- n: Menge der Produkte auf der Stützfläche
- P₁-Pₘ: Produkte
- R: Riemen
- S₁-S_{d}: Stützelemente
- T: Transportmittel
- W: Wägesystem
- X: Förderrichtung
- Y: Breitenrichtung
- Z: Höhenrichtung

## Patentansprüche

1. Wägesystem (W) zum Wiegen einer Produktanzahl (m) von wenigstens zwei Produkten (P₁...Pₘ), welche mehrspurig und/oder sequenziell bereitgestellt werden, umfassend
a) eine Positionierfläche (F_{P}) zur Auflage einer Teilmenge (k) der Produkte (P₁...Pₘ), und
b) eine Gesamtanzahl (d) von jeweils ein oberes Ende (E₁...E_{d}) aufweisenden Stützelementen (S₁...S_{d}), wobei die oberen Enden (E₁...E_{d}) eine Stützfläche (F_{S}) bilden zur Auflage der verbleibenden Teilmenge (n) der Produkte (P₁...Pₘ), und
c) wenigstens einen Lastaufnehmer (L_{P}, L_{S}) zur Aufnahme der Gewichtskraft der Produkte (P₁...Pₘ), wobei dazu die Positionierfläche (F_{P}) mit einem Lastaufnehmer (L_{P}) und/oder die die Stützfläche (F_{S}) bildenden Stützelemente (S₁...S_{d}) mit einem Lastaufnehmer (L_{S}) gekoppelt oder koppelbar sind, **dadurch gekennzeichnet,**
d) **dass** die Positionierfläche (F_{P}) und die Stützfläche (Fs) einander durchdringen und
e) **dass** die Stützfläche (F_{S}) und die Positionierfläche (F_{P}) in einer von mehreren aufeinanderfolgenden Teilbewegungen relativ zueinander so bewegbar sind,
**dass** im Rahmen einer Teilbewegung jeweils eine wählbare Übergabeanzahl (i) der Produkte (P₁...Pₘ) zusätzlich von der Positionierfläche (F_{P}) an die Stützfläche (F_{S}) oder umgekehrt übergeben wird, um die daraus resultierende Änderung der Gewichtskraft zu erfassen.

2. Wägesystem (W) nach Anspruch 1, **dadurch gekennzeichnet, dass** die Übergabeanzahl (i) gleich 1 ist.

3. Wägesystem (W) nach einem der vorigen Ansprüche, **dadurch gekennzeichnet, dass** die Stützfläche (F_{S}) mit der Positionierfläche (F_{P}) einen Winkel α ≠ 0° einschließt.

4. Wägesystem (W) nach einem der vorigen Ansprüche, **dadurch gekennzeichnet, dass** die Stützelemente (S₁...Sₙ) und die Positionierfläche (F_{P}) relativ zueinander so bewegbar sind,
a) dass eine beliebig wählbare Teilanzahl (j) der oberen Enden (E₁...E_{d}) oberhalb oder unterhalb der Positionierfläche (F_{P}) angeordnet ist,
und/oder
b) dass einige oder alle Stützelemente mit einem ersten Abschnitt der oberen Enden (E₁...E_{d}) die Positionierfläche (F_{P}) nach oben durchragen, während ein zweiter Abschnitt der oberen Enden (E₁...E_{d}) unterhalb der Positionierfläche (F_{P}) liegt.

5. Wägesystem (W) nach einem der vorigen Ansprüche, **dadurch gekennzeichnet, dass** die Stützelemente (S₁...Sₙ) und die Positionierfläche (F) so relativ zueinander bewegbar sind, dass eine beliebig wählbare Teilanzahl (j) der oberen Enden (E₁...E_{d}) nacheinander von unten nach oben oder von oben nach unten durch die Positionierfläche (F_{P}) dringt.

6. Wägesystem (W) nach einem der vorigen Ansprüche, **dadurch gekennzeichnet, dass** die Stützelemente (S₁...Sₙ) als schmale, vertikale Zinken ausgebildet sind, die kammartig nebeneinander liegen und deren obere Enden (E₁...Eₙ) gemeinsam die Stützfläche (F_{S}) ausbilden.

7. Wägesystem (W) nach einem der vorigen Ansprüche, ferner umfassend ein Transportmittel (T) mit mehreren, parallel zueinander angeordneten Transportelementen (R) zur Auflage und Förderung der Produkte (P₁...Pₘ) in einer Förderrichtung (X), wobei der Bereich der Auflage in Förderrichtung (X) und in einer dazu quer verlaufenden Breitenrichtung (Y) die Positionierfläche (F_{P}) definiert, und wobei die Stützelemente (S₁...Sₙ) relativ zu den Transportelementen (R) zwischen diesen in einer zur Positionierfläche (F) vorzugsweise senkrechten und vorzugsweise vertikalen Richtung (Z) auf und ab bewegbar sind.

8. Wägesystem (W) nach einem der vorigen Ansprüche, **dadurch gekennzeichnet, dass** zur Erzeugung der Relativbewegung zwischen den Stützelementen (S₁...Sₙ) und den Transportelementen (R) ein Hubantrieb (H) vorgesehen ist, der zur Anhebung und/oder Absenkung des Transportmittels (T) oder der Stützelemente (S₁...Sₙ) ansteuerbar ist, vorzugsweise in Abhängigkeit der wählbaren Übergabeanzahl (i).

9. Wägesystem (W) nach dem vorhergehenden Anspruch, **dadurch gekennzeichnet, dass**
a) entweder die Positionierfläche (F_{P}) oder die Stützfläche (F_{S}) den Lastaufnehmer (L_{P}, L_{S}) beaufschlagt,
b) wobei der Hubantrieb entweder die jeweiligevom Lastaufnehmer (L_{P}, L_{S}) getragene Fläche (F_{P}, F_{S}) oder die jeweils andere Fläche (F_{S}, F_{P}) bewegt.

10. Wägesystem (W) nach einem der vorhergehenden Ansprüche, **dadurch gekennzeichnet, dass** sich die Transportelemente (R) und die Stützelemente (S₁...S_{d}) gemeinsam parallel oder gemeinsam quer zur Förderrichtung erstrecken.

11. Wägesystem (W) nach einem der vorhergehenden Ansprüche, **dadurch gekennzeichnet, dass** die Positionierfläche (F_{P}) mit dem Lastaufnehmer (L_{P}) und die Stützfläche (Fs) mit dem Lastaufnehmer (Ls) gekoppelt ist.

12. Wägeanlage, umfassend mehrere Wägesysteme nach einem der vorigen Ansprüche.

13. Wiegeverfahren zum Wiegen von Produkten (P₁...Pₘ) mit einem Wägesystem (W) nach einem der Ansprüche 1 bis 11, umfassend folgende Verfahrensschritte:
a) Positionieren einer Produktanzahl (m) von wenigstens zwei Produkten (P₁..Pₘ) derart, dass jedes der Produkte entweder als Element einer Teilmenge (k) auf der Positionierfläche (F_{P}) oder als Element einer Teilmenge (n) auf der Stützfläche (F_{S}) aufliegt;
b) Durchführung mehrerer aufeinanderfolgender Teilbewegungen als jeweilige Relativbewegung zwischen der Positionierfläche (F_{P}) und den Stützelementen (S₁...Sₙ) derart, dass dadurch jeweils eine wählbare Übergabeanzahl (i) der Produkte (P₁...Pₘ) zusätzlich von der Positionierfläche (F_{P}) an die Stützfläche (Fs) oder umgekehrt übergeben wird, um die daraus resultierende Änderung der Gewichtskraft zu erfassen.

14. Wiegeverfahren nach dem vorhergehenden Anspruch, **dadurch gekennzeichnet, dass** die Übergabeanzahl gleich 1 ist.

15. Wiegeverfahren nach einem der vorigen Verfahrensansprüche, umfassend mehrere Teilbewegungen derart, dass nacheinander alle Produkte (P₁...Pₘ), die zuvor auf der Positionierfläche (F_{P}) auflagen, anschließend von der Stützfläche (F_{S}) getragen werden oder umgekehrt.

16. Wiegeverfahren nach dem vorhergehenden Anspruch, **dadurch gekennzeichnet, dass** durch aufeinander folgende Teilbewegungen nacheinander alle Produkte (P₁...Pₘ) einzeln
a) von der Transportfläche (F_{P}) vollständig abgehoben werden und dann nur noch auf der Stützfläche (Fs) aufliegen, oder
b) von der Stützfläche (Fs) vollständig abgehoben werden und dann nur noch auf der Positionierfläche (F_{P}) aufliegen.

17. Wiegeverfahren nach einem der vorigen Verfahrensansprüche, **dadurch gekennzeichnet, dass** mehrere, vorzugsweise alle den Produkten (P₁...Pₘ) jeweils zugeordneten, aufeinander folgenden Teilbewegungen zu einer kontinuierlichen Wiegebewegung zusammengefasst werden, während derer sich die Bewegungsrichtung der Positionierfläche (F_{P}) relativ zur Stützfläche (F_{S}) nicht umkehrt.

18. Wiegeverfahren nach einem der vorigen Verfahrensansprüche, **dadurch gekennzeichnet, dass** sich die Positionierfläche (F_{P}) und die Stützfläche (Fs) während einer mehrere Teilbewegungen umfassenden Wiegebewegung mit einer monotonen Bewegung, vorzugsweise mit konstanter Geschwindigkeit relativ zueinander bewegen.

19. Wiegeverfahren nach einem der vorigen Verfahrensansprüche, **dadurch gekennzeichnet, dass** durch die Wiegebewegung Produkte (P₁...Pₘ) mit unterschiedlichen Formaten und/oder unterschiedlicher räumlicher Ausrichtung und/oder frei wählbarer Auflageposition auf einer Fläche (F_{P}, F_{S}) bewegt werden.

20. Wiegeverfahren nach einem der vorigen Verfahrensansprüche, **dadurch gekennzeichnet, dass** alle zu wiegenden Produkte (P₁...Pₘ) im Rahmen des Wiegevorgangs ihre Position zueinander im Wesentlichen beibehalten.

## Claims

1. Weighing system (W) for weighing a number (m) of at least two products (P₁...Pₘ), which are provided in multiple lanes and/or sequentially, comprising
a) a positioning surface (F_{P}) for supporting a subset (k) of the products (P₁...Pₘ), and
b) a total number (d) of supporting elements (S₁...S_{d}) having in each case an upper end (E₁...E_{d}), wherein the upper ends (E₁...E_{d}) form a supporting surface (F_{S}) for supporting the remaining subset (n) of the products (P₁...Pₘ), and
c) at least one load receiver (L_{P}, L_{S}) for receiving the weight force of the products (P₁...Pₘ), wherein for this purpose the positioning surface (F_{P}) is or can be coupled to a load receiver (L_{P}) and/or the supporting elements (S₁...S_{d}) forming the supporting surface (F_{S}) is or can be coupled to a load receiver (L_{S}), **characterized in that**
d) the positioning surface (F_{P}) and the supporting surface (F_{S}) pass through each other and
e) the supporting surface (F_{S}) and the positioning surface (F_{P}) are movable relative to each other in one of several successive partial movements such that within the scope of a partial movement in each case a selectable transfer number (i) of the products (P₁...Pₘ) are additionally transferred from the positioning surface (F_{P}) to the supporting surface (F_{S}) or vice versa, in order to determine the resultant change in the weight force.

2. Weighing system (W) according to claim 1, **characterized in that** the transfer number (i) is equal to 1.

3. Weighing system (W) according to one of the preceding claims, **characterized in that** the supporting surface (F_{S}) forms an angle α ± 0° with the positioning surface (F_{P}).

4. Weighing system (W) according to one of the preceding claims, **characterized in that** the supporting elements (S₁...Sₙ) and the positioning surface (F_{P}) are movable relative to each other such that
a) a freely selectable partial number (j) of the upper ends (E₁...E_{d}) are arranged above or underneath the positioning surface (F_{P}),
and/or
b) some or all supporting elements protrude, with a first portion of the upper ends (E₁...E_{d}), upwards through the positioning surface (F_{P}), while a second portion of the upper ends (E₁...E_{d}) lies underneath the positioning surface (F_{P}).

5. Weighing system (W) according to one of the preceding claims, **characterized in that** the supporting elements (S₁...Sₙ) and the positioning surface (F) are movable relative to each other such that a freely selectable partial number (j) of the upper ends (E₁...E_{d}) penetrate the positioning surface (F_{P}) one after another from the bottom up or from the top down.

6. Weighing system (W) according to one of the preceding claims, **characterized in that** the supporting elements (S₁...Sₙ) are formed as narrow, vertical prongs, which lie next to each other in the manner of a comb and the upper ends (E₁...Eₙ) of which together form the supporting surface (Fs).

7. Weighing system (W) according to one of the preceding claims, furthermore comprising a transporting means (T) with several transporting elements (R) arranged parallel to each other for supporting and conveying the products (P₁...Pₘ) in a conveying direction (X), wherein the area of the support defines the positioning surface (F_{P}) in the conveying direction (X) and in a width direction (Y) running transverse thereto, and wherein the supporting elements (S₁...Sₙ) are movable up and down relative to the transporting elements (R) between the latter in a direction (Z) preferably perpendicular to the positioning surface (F) and preferably vertical.

8. Weighing system (W) according to one of the preceding claims, **characterized in that**, to produce the relative movement between the supporting elements (S₁...Sₙ) and the transporting elements (R), a lifting drive (H) is provided which is controllable to raise and/or lower the transporting means (T) or the supporting elements (S₁...Sₙ), preferably depending on the selectable transfer number (i).

9. Weighing system (W) according to the preceding claim, **characterized in that**
a) either the positioning surface (F_{P}) or the supporting surface (F_{S}) acts on the load receiver (L_{P}, L_{S}),
b) wherein the lifting drive moves either the respective surface (F_{P}, F_{S}) carried by the load receiver (L_{P}, L_{S}) or the respectively other surface (F_{S}, F_{P}).

10. Weighing system (W) according to one of the preceding claims, **characterized in that** the transporting elements (R) and the supporting elements (S₁...S_{d}) together extend parallel to the conveying direction or together extend transverse thereto.

11. Weighing system (W) according to one of the preceding claims, **characterized in that** the positioning surface (F_{P}) is coupled to the load receiver (L_{P}) and the supporting surface (F_{S}) is coupled to the load receiver (L_{S}).

12. Weighing installation, comprising several weighing systems according to one of the preceding claims.

13. Weighing method for weighing products (P₁...Pₘ) with a weighing system (W) according to one of claims 1 to 11, comprising the following method steps:
a) positioning a number (m) of at least two products (P₁..Pₘ) in such a way that each of the products either rests on the positioning surface (F_{P}) as an element of a subset (k) or rests on the supporting surface (F_{S}) as an element of a subset (n);
b) performing several successive partial movements as a respective relative movement between the positioning surface (F_{P}) and the supporting elements (S₁..Sₙ) in such a way that in each case a selectable transfer number (i) of the products (P₁...Pₘ) are thereby additionally transferred from the positioning surface (F_{P}) to the supporting surface (F_{S}) or vice versa, in order to determine the resultant change in the weight force.

14. Weighing method according to the preceding claim, **characterized in that** the transfer number is equal to 1.

15. Weighing method according to one of the preceding method claims, comprising several partial movements in such a way that, one after another, all products (P₁...Pₘ) which previously rested on the positioning surface (F_{P}) are then carried by the supporting surface (F_{S}), or vice versa.

16. Weighing method according to the preceding claim, **characterized in that** through successive partial movements, one after another, all products (P₁...Pₘ) are individually
a) raised completely off the transporting surface (F_{P}) and then only rest on the supporting surface (F_{S}), or
b) raised completely off the supporting surface (Fs) and then only rest on the positioning surface (F_{P}).

17. Weighing method according to one of the preceding method claims, **characterized in that** several, preferably all, successive partial movements allocated in each case to the products (P₁...Pₘ) are combined in one continuous weighing movement, during which the movement direction of the positioning surface (F_{P}) relative to the supporting surface (Fs) is not reversed.

18. Weighing method according to one of the preceding method claims, **characterized in that**, during a weighing movement comprising several partial movements, the positioning surface (F_{P}) and the supporting surface (F_{S}) move relative to each other with a monotonic movement, preferably at a constant speed.

19. Weighing method according to one of the preceding method claims, **characterized in that** through the weighing movement products (P₁...Pₘ) with different formats and/or different spatial alignment and/or freely selectable support position are moved on a surface (F_{P}, F_{S}).

20. Weighing method according to one of the preceding method claims, **characterized in that** all products (P₁...Pₘ) to be weighed substantially maintain their position relative to each other within the scope of the weighing process.

## Revendications

1. Système de pesage (W) permettant de peser un nombre de produits (m) d'au moins deux produits (P₁...Pₘ), lesquels sont fournis sur plusieurs voies et/ou de façon séquentielle, comprenant
a) une surface de positionnement (F_{P}) permettant l'appui d'une quantité partielle (k) des produits (P₁...Pₘ), et
b) un nombre total (d) d'une extrémité supérieure (E₁...E_{d}) respective présentant des éléments de support (S₁...S_{d}), les extrémités supérieures (E₁...E_{d}) formant une surface de support (F_{S}) permettant l'appui de la quantité partielle restante (n) des produits (P₁...Pₘ), et
c) au moins un récepteur de charge (L_{P}, L_{S}) permettant de recevoir le poids des produits (P₁...Pₘ), la surface de positionnement (F_{P}) étant accouplée ou pouvant être accouplée à un récepteur de charge (L_{P}) et/ou les éléments de support (S₁...S_{d}) formant la surface de support (F_{S}) étant accouplés ou pouvant être accouplés à un récepteur de charge (L_{S}),
**caractérisé en ce**
d) **que** la surface de positionnement (F_{P}) et la surface de support (F_{S}) pénètrent l'une dans l'autre et
e) **que** la surface de support (F_{S}) et la surface de positionnement (F_{P}) sont mobiles l'une par rapport l'autre dans l'un de plusieurs mouvements partiels successifs de telle sorte que, dans le cadre d'un mouvement partiel, un nombre de transferts (i) sélectionnable des produits (P₁...Pₘ) est respectivement transféré en outre de la surface de positionnement (F_{P}) à la surface de support (F_{S}) ou vice versa afin d'enregistrer le changement de poids qui en résulte.

2. Système de pesage (W) selon la revendication 1, **caractérisé en ce que** le nombre de transferts (i) est égal à 1.

3. Système de pesage (W) selon l'une des revendications précédentes, **caractérisé en ce que** la surface de support (F_{S}) forme un angle α ≠ 0° avec la surface de positionnement (F_{P}).

4. Système de pesage (W) selon l'une des revendications précédentes, **caractérisé en ce que** les éléments de support (S₁...Sₙ) et la surface de positionnement (F_{P}) sont mobiles les uns par rapport aux autres de telle sorte
a) qu'un nombre partiel arbitrairement sélectionnable (j) des extrémités supérieures (E₁...E_{d}) est disposé au-dessus ou au-dessous de la surface de positionnement (F_{P}), et/ou
b) que certains ou tous les éléments de support font saillie, avec une première section des extrémités supérieures (E₁...E_{d}), au-delà de la surface de positionnement (F_{P}) vers le haut, tandis qu'une seconde section des extrémités supérieures (E₁...E_{d}) est située en-dessous de la surface de positionnement (F_{P}).

5. Système de pesage (W) selon l'une des revendications précédentes, **caractérisé en ce que** les éléments de support (S₁...Sₙ) et la surface de positionnement (F) sont mobiles les uns par rapport aux autres de telle sorte qu'un nombre partiel arbitrairement sélectionnable (j) des extrémités supérieures (E₁...E_{d}) pénètre consécutivement de bas en haut ou de haut en bas à travers la surface de positionnement (F_{P}).

6. Système de pesage (W) selon l'une des revendications précédentes, **caractérisé en ce que** les éléments de support (S₁...Sₙ) sont réalisés sous la forme de dents verticales étroites qui sont disposées les unes à côté des autres en forme de peigne et dont les extrémités supérieures (E₁...Eₙ) forment conjointement la surface de support (F_{S}).

7. Système de pesage (W) selon l'une des revendications précédentes, comprenant en outre un moyen de transport (T) comportant plusieurs éléments de transport (R) disposés parallèlement les uns aux autres et permettant l'appui et le transport des produits (P₁...Pₘ) dans une direction de transport (X), la zone de l'appui définissant, dans la direction de transport (X) et dans une direction de largeur transversale (Y), la surface de positionnement (F_{P}), et les éléments de support (S₁...Sₙ) étant mobiles vers le haut et vers le bas par rapport aux éléments de transport (R) entre cette direction (Z) de préférence perpendiculaire et de préférence verticale à la surface de positionnement (F).

8. Système de pesage (W) selon l'une des revendications précédentes, **caractérisé en ce que** afin de générer le mouvement relatif entre les éléments de support (S₁...Sₙ) et les éléments de transport (R), un entraînement de levage (H) est prévu, lequel peut être commandé pour soulever et/ou abaisser le moyen de transport (T) ou les éléments de support (S₁...Sₙ), de préférence en fonction du nombre de transferts (i) sélectionnable.

9. Système de pesage (W) selon la revendication précédente, **caractérisé en ce que**
a) soit la surface de positionnement (F_{P}), soit la surface de support (F_{S}) sollicite le récepteur de charge (L_{P}, L_{S}),
b) l'entraînement de levage déplaçant soit la surface respective (F_{P}, F_{S}) portée par le récepteur de charge (L_{P}, L_{S}) soit l'autre surface respective (F_{S}, F_{P}).

10. Système de pesage (W) selon l'une des revendications précédentes, **caractérisé en ce que** les éléments de transport (R) et les éléments de support (S₁...S_{d}) s'étendent conjointement parallèlement ou conjointement transversalement à la direction de transport.

11. Système de pesage (W) selon l'une des revendications précédentes, **caractérisé en ce que** la surface de positionnement (F_{P}) est accouplée au récepteur de charge (L_{P}) et la surface de support (F_{S}) est accouplée au récepteur de charge (L_{S}).

12. Installation de pesage, comprenant plusieurs systèmes de pesage selon l'une des revendications précédentes.

13. Procédé de pesage permettant de peser des produits (P₁...Pₘ) et comportant un système de pesage (W) selon l'une des revendications 1 à 11, comprenant les étapes de procédé suivantes :
a) positionnement d'un nombre de produits (m) d'au moins deux produits (P₁...Pₘ) de telle sorte que chaque produit repose soit sur la surface de positionnement (F_{P}) en tant qu'élément d'une quantité partielle (k), soit sur la surface de support (F_{S}) en tant qu'élément d'une quantité partielle (n) ;
b) exécution de plusieurs mouvements partiels successifs en tant que mouvement relatif respectif entre la surface de positionnement (F_{P}) et les éléments de support (S₁...Sₙ) de telle sorte qu'un nombre de transferts (i) sélectionnable respectif des produits (P₁...Pₘ) est ainsi transféré en outre de la surface de positionnement (F_{P}) à la surface de support (F_{S}) ou vice versa afin d'enregistrer le changement de poids qui en résulte.

14. Procédé de pesage selon la revendication précédente, **caractérisé en ce que** le nombre de transferts est égal à 1.

15. Procédé de pesage selon l'une des revendications de procédé précédentes, comprenant plusieurs mouvements partiels de telle sorte que tous les produits (P₁...Pₘ) qui reposaient auparavant sur la surface de positionnement (F_{P}) sont ensuite portés consécutivement par la surface de support (F_{S}) ou vice versa.

16. Procédé de pesage selon la revendication précédente, **caractérisé en ce que** grâce à des mouvements partiels successifs, tous les produits (P₁...Pₘ) sont consécutivement
a) soulevés complètement les uns après les autres de la surface de transport (F_{P}) puis ne reposent que sur la surface de support (F_{S}), ou
b) soulevés complètement les uns après les autres de la surface de support (F_{S}) puis ne reposent que sur la surface de positionnement (F_{P}).

17. Procédé de pesage selon l'une des revendications précédentes, **caractérisé en ce que** plusieurs, de préférence tous les produits (P₁...Pₘ) des mouvements partiels respectivement associés et successifs sont combinés en un mouvement de pesage continu, au cours duquel le sens de déplacement de la surface de positionnement (F_{P}) ne s'inverse pas par rapport à la surface de support (F_{S}).

18. Procédé de pesage selon l'une des revendications de procédé précédentes, **caractérisé en ce que** la surface de positionnement (F_{P}) et la surface de support (F_{S}) se déplacent, lors d'un mouvement de pesage comprenant une pluralité de mouvements partiels, l'une par rapport à l'autre avec un mouvement monotone, de préférence à une vitesse constante.

19. Procédé de pesage selon l'une des revendications de procédé précédentes, **caractérisé en ce que** grâce au mouvement de pesage, les produits (P₁...Pₘ) sont déplacés sur une surface (F_{P}, F_{S}) avec différents formats et/ou différentes orientations spatiales et/ou positions d'appui librement sélectionnables.

20. Procédé de pesage selon l'une des revendications de procédé précédentes, **caractérisé en ce que** tous les produits à peser (P₁...Pₘ) conservent sensiblement leur position les uns par rapport aux autres dans le cadre du processus de pesage.
